# EUROPEAN PATENT SPECIFICATION

(11) **EP 3 790 377 B1**
(45) Date of publication and mention of the grant of the patent: **09.04.2025**
(21) Application number: 19736527.3
(22) Date of filing: 08.05.2019
(51) Int. Cl.: A01G 9/14, A01N 25/10, A01N 25/34

(54) **GREENHOUSE COVER LOADED WITH PESTICIDE PROVIDING CONTROLLED RELEASE**
MIT PESTIZIDEN BELADENE GEWÄCHSHAUSABDECKUNG ZUR BEREITSTELLUNG EINER KONTROLLIERTEN FREISETZUNG
REVÊTEMENT DE SERRE CHARGÉ AVEC UN PESTICIDE ASSURANT UNE LIBÉRATION CONTRÔLÉE

(30) Priority: 09.05.2018 TR 201806547
(43) Date of publication of application: 17.03.2021
(73) Proprietor: Sabanci Universitesi, 34956 Istanbul (TR)
(72) Inventor: MENCELOGLU, Yusuf Ziya, 34956 Tuzla/Istanbul (TR); SEVEN, Merve Senem, 34956 Tuzla/Istanbul (TR)
(74) Representative: Mutlu, Aydin
(86) International application number: PCT/TR2019/050307
(87) International publication number: WO 2019/216863

(56) References cited:
- EP-A1- 2 965 623
- US-A- 4 350 678
- US-A- 5 651 976
- US-A1- 2008 194 406
- US-A1- 2015 072 862
- BANGCHAO ZHONG ET AL: "Halloysite Tubes as Nanocontainers for Herbicide and Its Controlled Release in Biodegradable Poly(vinyl alcohol)/Starch Film", JOURNAL OF AGRICULTURAL AND FOOD CHEMISTRY, vol. 65, no. 48, 17 November 2017 (2017-11-17), US, pages 10445 - 10451, XP055621720, ISSN: 0021-8561, DOI: 10.1021/acs.jafc.7b04220
- SENEM AVAZ SEVEN ET AL: "Abstract", BIORXIV, 31 July 2018 (2018-07-31), XP055621707, Retrieved from the Internet <URL:https://www.biorxiv.org/content/biorxiv/early/2018/07/31/381426.full.pdf> [retrieved on 20190912], DOI: 10.1101/381426

## Description

### Technical Field of the Invention

The present invention relates to polymeric cover materials for use in greenhouse applications, wherein pesticides are released to their environment in a controlled manner without being in contact with plants. The invention in particular relates to a greenhouse cover formed by incorporation of multi functional halloysite nanotubes loaded with pesticide, and optionally pheromone materials, into a polymeric film structure providing controlled release of said pesticide material.

### Background of the Invention

Polymeric materials, commonly named as a greenhouse cover, are widely used in greenhouse cultivation for the purpose that grown plants would not be affected by versatile weather conditions (i.e. temperature, UV radiation, wind, rain, snow etc.). The feature of those greenhouse covers which occupy a large area remain solely to isolate the plants from the outer environment conditions as their functionality doesn't possess any other protective feature. Pesticides, especially synthetic pesticides are used to protect plants from harmful microorganisms, herbs, insects and other animals. Mostly, pesticides have different varieties such as herbicide, insecticide, nematicide, molluscicide, piscicide, avicide, rodenticide, bactericide, fungicide.

However, commonly used synthetic pesticides pose danger with respect to public health and environmental safety due to uncontrolled use. It has been known that only 0.1% of applied pesticides reach the target pests while the rest of the pesticides are accumulated in soil and the plant *(*Horrigan, L., Lawrence, R. S., Walker, P. 2002. "How sustainable agriculture can address the environmental and human health harms of industrial agriculture", Environmental Health Perspectives, 110 (5), 445-456*).* Even though there is a decreasing trend in terms of pesticide use in the world, it has been reported that the annual pesticide use in Turkey was increased by 270% between the years 1979-2000 *(Delen, N. Tiryaki, O., Türkseven, S., Temur, C. 2015. "Türkiye'de pestisit kullan* 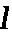 *m* 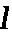 *, kal* 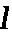 *nt* 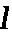 *ve dayan* 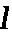 *kl* 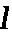 *l* 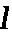 *k sorunlar* 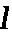 *", TMMOB-Ziraat Mühendisleri Odasi, Türkiye Ziraat Mühendisliǧi 8. Teknik Kongresi Bildiriler Kitabi, 2, 758-778)*. Pesticide production market in Turkey is around $ 230-250 million with an annual 33,000 tons of preparations. *(Tiryaki, O. 2013. "Türkiye'deyap* 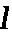 *lan pestisit kal* 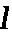 *nt* 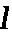 *analiz ve çal* 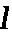 *smalar* 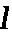 "*, Erciyes University Journal of the Institute of Science and Technology, 29, 73-80).* This market is dominated by insecticides (47%), followed by fungicides (24%) and herbicides (13%). Synthetic pesticides are accumulated on food products and cause acute and knonic health problems in consumers. Because of the common use of insecticides among commercial pesticides, efforts to reduce the toxic effects are accelerated. For this purpose, alternative formulations of natural insecticides and conventional insecticides are being developed.

Alternative applications which allow for more controlled use of pesticides by presenting them in beads and particles instead of applying pesticides directly are known in the state of the art

For instance, US 2010/0004132 A1 discloses a method of treating a tubular clay material in order to allow to be loaded with an active agent. Said tubular clay material can be a halloysite nanotube. It is also noted that the loaded active agent may be herbicides, pesticides and fertilizers.

US 5,651,976 on the other hand discloses compositions and methods for the release of active agents. In this context, inorganic microtubular ceramics are used. These ceramics can be halloysite nanotubes. Among the active substances which are planned to be released in a controlled manner pesticides and herbicides have been recited. Some carrier materials also may be added to this structure.

US 4 350 678 A and US 2008/194406 A1 disclose relevant background art.

In spite of these alternative solutions, direct contact of pesticides with soil and plants cannot be prevented. In addition, it is not possible to deliver pesticides to the plant environment in controlled amounts. Beside this, an effective application for preventing and eliminating pests in greenhouse areas without entering inside of the greenhouse environment cannot be presented.

The present invention provides a greenhouse cover and its production method as described in the appended claims to deliver solutions to the problems of the applications above in the state of art.

### Detailed Description of the Invention

The present invention provides a greenhouse cover according to claim 1 to eliminate the above-mentioned drawbacks. Said greenhouse cover is in the form of a cover which is composed of a polymeric film and is suitable for isolation of the greenhouse environment in accordance with conventional use.

In this way, on one hand, controlled release of pesticides from halloysite nanotubes to the greenhouse environment is possible, and on the other hand it is possible to prevent pests before they enter the greenhouse and more importantly, to provide this protective effect without contact with agricultural plants and soil.

The halloysite nanotubes (HNT) used in the context of the present invention are commercially available as aluminosilicate clay mineral structured materials. HNTs exhibit structures in the form of a hollow tube suitable for loading and storage of certain substances within them, and are well known in the mineralogy. These are effective nano-containers due to said hollow structures.

Accordingly, the pesticides used in the present invention can be easily loaded into the HNTs, for example by means of a sonication and/or vacuum filling process. As the loaded pesticide is in the HNT structure, it provides controlled release which is highly suitable for agricultural applications. However, the inventors have realized that the desired controlled release profile can be obtained ideally and effectively, and elimination of the insects from the greenhouse environment in greenhouse cultivation can be obtained successfully, by using deltamethrin as a pesticide, which is actually an insecticide.

In preferred embodiments of the invention, it is contemplated that the use of a pheromone having pest attractive characteristics is advantageous when said pesticide is selected as an insecticide. In this way, it is possible to attract the insects before entering into the greenhouse environment and to eliminate them from the beginning with the help of the insecticide used.

The polymeric greenhouse cover material used in the present invention is preferably a thermoplastic and thermoset material. Preferred polymer or film materials include polyethylene, polypropylene, polystyrene, polyurethane, polyvinyl chloride, polyester, fluoropolymers, poly (lactic acid), poly (caprolactone), polycarbonate and polyamide, or a copolymer, a mixture or a laminated film thereof. The polymeric film material of the invention is more preferably made of polyethylene, more preferably linear-low density polyethylene (LLDPE) material.

Accordingly, the present invention in another aspect relates to a method for the production of a greenhouse cover, said method comprises the steps of:
- loading of a pesticide substance to halloysite nanotubes (HNT),
- incorporating the formed halloysite nanotubes into a polymeric material, and
- the use of said polymeric material to produce a film material to form a greenhouse cover.

The pesticide material used in the method of the invention is preferably an insecticide, more preferably deltamethrin as mentioned above.

More preferably, the production of the greenhouse cover of the invention comprises the process of mixing pesticide loaded HNTs with polymer beads and extruding this mixture. Said extrusion process can be used in the production of a polymeric film. The greenhouse cover of the invention is more preferably in the form of a barrier film and can be formed, for instance, by conventional methods available in the prior art, such as blown-film extrusion or extrusion as a sheet.

The inventors have realized that the amount of polymer used in the production of polymeric film decreases as a result of the use of said HNTs, whereas strength of the material increases. As can be appreciated by those skilled in the art, this will contribute for creating a more environment friendly (less waste) product besides being a cost-reducing factor.

In an exemplary embodiment for loading the pesticide substance into HNTs; the pesticide substance is initially mixed with the HNTs followed by application of vacuum to evacuate the interior air through the holes of HNTs and filling of these holes with the pesticide agent. If pests are targeted, pheromones specific to the targeted insect or insects may also be included in the above mixture. If a part of the HNTs is not intended to contain pesticides, they can be used directly as they are. If pesticide substances are used, the loaded HNTs are centrifuged in this case to remove excess pesticide substances and as a result, they are dried in order to be brought into powder form.

The HNTs obtained in this way can be subjected to extrusion process by mixing with a polymer as described above.

In another aspect, the invention also comprises a greenhouse comprising the polymeric cover material as described above.

As is known, plants with chlorophyll conduct a photosynthesis process while sunlight is present. During this process, organic compounds and oxygen are produced by using light energy and carbon dioxide. In the absence of sunlight (night-time), plants enter in the process of respiration and produce energy and carbon dioxide by consuming oxygen and glucose. Therefore, the balancing of gas in the greenhouse environment, in other words bringing carbon dioxide and oxygen balance similar to the natural equilibrium in the open air is important in terms of health and growing of the plants as well as avoidance from undesired diseases during cultivation.

For this purpose, in preferred embodiments, the present invention provides incorporating a mixture of unloaded hollow HNTs and HNTs loaded with pesticide into the polymeric barrier film material. The hollow HNTs have the ability to absorb gases, moisture and odours in the environment. Thus, an advantageous embodiment is presented for the scavenging of the disturbing or detrimental factors which might have increased concentration in the greenhouse environment.

Accordingly, in the preferred embodiments of the present invention, some of the HNTs are loaded with pesticide, and some of them are used as hollow without any loading, whereby unwanted gases and moisture generated in the greenhouse are therefore eliminated.

The inventors have determined that these cleaning/scavenging properties of HNTs can be significantly increased by increasing their surface area and internal volume, and therefore an H₂SO₄ treatment would be useful to achieve this objective. Thus, the production method of the present invention preferably comprises pre-treatment of HNTs with H₂SO₄.

## Claims

1. A polymeric greenhouse cover in the form of a polymeric film **characterized in that** the greenhouse cover comprises halloysite nanotubes (HNT) loaded with a pesticide substance, wherein said halloysite nanotubes are structurally included into the polymeric material.

2. A greenhouse cover according to claim 1, wherein said pesticide substance is an insecticide.

3. A greenhouse cover according to claim 2, wherein said HNTs further comprise at least one pheromone.

4. A greenhouse cover according to claim 2, wherein said insecticide is deltamethrin.

5. A greenhouse cover according to claim 1, wherein said polymeric material comprises at least one polymeric material selected from the group consisting of polyethylene, polypropylene, polystyrene, polyurethane, polyvinyl chloride, polyester, fluoropolymers, poly (lactic acid), poly (caprolactone), polycarbonate and polyamide, or a copolymer, a mixture, or a laminated film thereof.

6. A greenhouse cover according to claim 5, wherein said polymeric material comprises polyethylene.

7. A greenhouse cover according to claim 6, wherein said polyethylene is linear-low density polyethylene (LLDPE).

8. A greenhouse cover according to claim 1, wherein a portion of the halloysite nanotubes are presented as hollow nanotubes without loading pesticide, so that said greenhouse cover film comprises a mixture of pesticide loaded nanotubes and pesticide free hollow halloysite nanotubes.

9. A method for producing a greenhouse cover comprising the following steps:
- loading of a pesticide substance to halloysite nanotubes (HNT),
- incorporating the so formed halloysite nanotubes into a polymeric material, and
- using of said polymeric material to produce a film material to form the greenhouse cover, wherein said halloysite nanotubes are structurally included into the polymeric material.

10. A method according to claim 9, wherein said pesticide substance is an insecticide which is deltamethrin.

11. A method according to claim 9, wherein said method comprises mixing the polymer material by adding the HNTs and subjecting said mixture to an extrusion.

12. A greenhouse comprising a greenhouse cover according to claim 1.

## Patentansprüche

1. Polymere Gewächshausabdeckung in der Form eines Polymerfilms, **dadurch gekennzeichnet, dass** die Gewächshausabdeckung mit einer Pestizidsubstanz beladene Halloysit-Nanoröhren (HNT) umfasst, wobei die Halloysit-Nanoröhren strukturell in das Polymermaterial eingebracht sind.

2. Gewächshausabdeckung nach Anspruch 1, wobei die Pestizidsubstanz ein Insektizid ist.

3. Gewächshausabdeckung nach Anspruch 2, wobei die HNTs weiter mindestens ein Pheromon umfassen.

4. Gewächshausabdeckung nach Anspruch 2, wobei das Insektizid Deltamethrin ist.

5. Gewächshausabdeckung nach Anspruch 1, wobei das Polymermaterial mindestens ein Polymermaterial umfasst, ausgewählt aus der Gruppe, bestehend aus Polyethylen, Polypropylen, Polystyrol, Polyurethan, Polyvinylchlorid, Polyester, Fluorpolymeren, Polymilchsäure, Polycaprolacton, Polycarbonat und Polyamid oder einem Copolymer, einem Gemisch oder einer laminierten Folie davon.

6. Gewächshausabdeckung nach Anspruch 5, wobei das Polymermaterial Polyethylen umfasst.

7. Gewächshausabdeckung nach Anspruch 6, wobei das Polyethylen lineares Polyethylen niedriger Dichte (LLDPE) ist.

8. Gewächshausabdeckung nach Anspruch 1, wobei ein Teil der Halloysit-Nanoröhren als hohle Nanoröhren ohne Pestizidbeladung vorliegt, so dass die Gewächshausabdeckungsfolie ein Gemisch aus mit Pestizid beladenen Nanoröhren und pestizidfreien hohlen Halloysit-Nanoröhren umfasst.

9. Verfahren zur Herstellung einer Gewächshausabdeckung, umfassend die folgenden Schritte:
- Beladen von Halloysit-Nanoröhren (HNT] mit einer Pestizidsubstanz,
- Einbringen der so gebildeten Halloysit-Nanoröhren in ein Polymermaterial, und
- Verwenden des Polymermaterials zur Herstellung eines Filmmaterials zur Bildung der Gewächshausabdeckung, wobei die Halloysit-Nanoröhren strukturell in das Polymermaterial eingebracht sind.

10. Verfahren nach Anspruch 9, wobei die Pestizidsubstanz ein Insektizid ist, welches Deltamethrin ist.

11. Verfahren nach Anspruch 9, wobei das Verfahren das Mischen des Polymermaterials durch Zugabe der HNTs und das Unterwerfen des Gemisches einer Extrusion umfasst.

12. Gewächshaus, umfassend eine Gewächshausabdeckung gemäß Anspruch 1.

## Revendications

1. Bâche de serre en polymère sous forme de film de polymère, **caractérisée en ce que** la bâche de serre comprend des nanotubes d'halloysite (NTH) chargés d'une substance pesticide, lesquels nanotubes d'halloysite sont intégrés dans la structure du matériau polymère.

2. Bâche de serre conforme à la revendication 1, dans laquelle ladite substance pesticide est un insecticide.

3. Bâche de serre conforme à la revendication 2, dans laquelle lesdits NTH comprennent en outre au moins une phéromone.

4. Bâche de serre conforme à la revendication 2, dans laquelle ledit insecticide est de la deltaméthrine.

5. Bâche de serre conforme à la revendication 1, dans laquelle ledit matériau polymère comprend au moins un matériau polymère, choisi dans l'ensemble constitué par les polyéthylène, polypropylène, polystyrène, polyuréthane, poly(chlorure de vinyle), polyesters, polymères fluorés, poly(acide lactique), poly(caprolactone), polycarbonate et polyamides, ou un copolymère, un mélange ou un film stratifié de ceux-ci.

6. Bâche de serre conforme à la revendication 5, dans laquelle ledit matériau polymère comprend un polyéthylène.

7. Bâche de serre conforme à la revendication 6, dans laquelle ledit polyéthylène est un polyéthylène basse densité linéaire (PEbdl).

8. Bâche de serre conforme à la revendication 1, dans laquelle une partie des nanotubes d'halloysite se présentent comme des nanotubes creux sans charge de pesticide, de sorte que ledit film de la bâche de serre comprend un mélange de nanotubes chargés de pesticide et de nanotubes d'halloysite creux sans pesticide.

9. Procédé de production d'une bâche de serre, comportant les étapes suivantes :
- introduire une charge de substance pesticide dans des nanotubes d'halloysite (NTH),
- incorporer les nanotubes d'halloysite ainsi obtenus dans un matériau polymère,
- et utiliser ce matériau polymère pour produire un matériau sous forme de film destiné à former la bâche de serre, dans lequel lesdits nanotubes d'halloysite sont intégrés dans la structure du matériau polymère.

10. Procédé conforme à la revendication 9, dans lequel ladite substance pesticide est un insecticide qui est de la deltaméthrine.

11. Procédé conforme à la revendication 9, lequel procédé comporte le fait de préparer un mélange du matériau polymère en y ajoutant les NTH, et le fait de soumettre ce mélange à une opération d'extrusion.

12. Serre comportant une bâche de serre conforme à la revendication 1.
